# EUROPÄISCHE PATENTANMELDUNG

(11) **EP 1 284 551 A1**
(43) Veröffentlichungstag der Anmeldung: **19.02.2003**
(21) Anmeldenummer: 01119178.0
(22) Anmeldetag: 08.08.2001
(51) Int. Cl.: H04L 12/26, H04L 12/56, G06F 17/60

(54) **Kennzeichnung der Dienstgüte einer Informationsübermittlung in einem Kommunikationsnetz**

(71) Anmelder: SIEMENS AKTIENGESELLSCHAFT, 80333 München (DE)
(72) Erfinder: Knaebchen, Andreas, Dr., 81377 München (DE); Liebhart, Rainer, 86529 Schrobenhausen (DE); Müller, Heribert, 3730 Eggenburg (AT)

(57) **Zusammenfassung**

Aus dem Stand der Technik ist bekannt bestimmte statistische Daten von einem Zwischen-Knoten eines Netzwerks an einen Call Agent zu übermitteln. Jedoch findet sich kein Hinweis diese Daten zur Kennzeichnung der Dienstgüte einer Informationsübermittlung zu nutzen. Es besteht das Problem, daß die Zwischenknoten durch diese Signalisierungsarbeit überlastet werden, da mit steigender Anzahl der Verbindungen immer mehr statistische Daten erzeugt und gesendet werden müssen. Die Erfindung ermöglicht eine effiziente Erzeugung der Dienstgüte indem der Endpunkt der Informationsübermittlung diese Daten selbst erzeugt und an eine instanz im Netz weiterreicht.

## Beschreibung

Die Erfindung betrifft Verfahren und Vorrichtungen, insb. Computerprogrammprodukte, zur Speicherung von Daten zur Kennzeichnung der Dienstgüte einer Informationsübermittlung in einem Kommunikationsnetz.

In der Vergangenheit haben sich zwei wesentliche Typen von Kommunikationsnetzen zur Übermittlung von Informationen herausgebildet: Paketorientierte Datennetze und leitungsorientierte Sprachnetze. Sie unterschieden sich u.a. durch ihre unterschiedlichen Dienstgüte-Anforderungen.

Dienstgüte - auch QoS (Quality of Service) genannt - wird je nach Kontext unterschiedlich definiert und in der Folge mit jeweils unterschiedlichen Metriken bewertet. Bekannte Beispiele für Metriken zur Messung von Dienstgüte sind die maximal übermittelbare Anzahl von Informationen (Bandwidth), die Anzahl der übermittelten Informationen, die Anzahl der nicht übermittelten Informationen (Loss Rate), die - ggf. gemittelte - zeitliche Verzögerung bei der Übermittlung ((Transmission) Delay), die - ggf. gemittelte - Abweichung vom ansonsten üblichen Abstand zwischen je zwei Informationsübermittlungen (Delay Jitter, Interarrival Jitter), oder die Anzahl der erst gar nicht zur Übermittlung zugelassenen Informationen (Blocking Rate).

Leitungsorientierte Sprachnetze sind auf die Übermittlung von in der Fachwelt auch als 'Gespräch', 'Call' oder 'Session' bezeichneten kontinuierlich strömenden (Sprach-) Informationen ausgelegt. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu einem akustisch wahrnehmbaren Knacksen. In der Fachwelt wird die Übermittlung von Sprache verallgemeinert auch als 'Echtzeit-(Übermittlungs-)Dienst' bzw. als 'Realtime-Service' bezeichnet. Die Dienstgüte wird durch entsprechende Dimensionierung und Planung der Sprachnetze erreicht, wobei die Übermittlungskapazität selbst infolge der Leitungsorientierung grds. keinen Schwankungen unterliegt. Die Sicherheit wird beispielsweise durch entsprechende räumliche und organisatorische Abschottung der Sprachnetze gegen unbefugte Dritte bewirkt. So lag in der Vergangenheit z.B. die Zuständigkeit für Sprachnetze häufig in staatlicher Hand, wodurch z.B. ein Mithören durch Dritte weitgehend ausgeschlossen werden konnte.

Paketorientierte Datennetze sind auf die Übermittlung von in der Fachwelt auch als 'Datenpaketströme' bezeichneten Paketströmen ausgelegt. Hierbei muss üblicherweise keine hohe Dienstgüte garantiert werden. Ohne garantierte Dienstgüte erfolgt die Übermittlung der Datenpaketströme z.B. mit zeitlich schwankenden Verzögerungen, da die einzelnen Datenpakete der Datenpaketströme üblicherweise in der Reihenfolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet. Sicherheit spielt eine untergeordnete Rolle. Sie wird in kleineren Netzen wie z.B. lokalen Netzen (LAN) bzw. firmeninternen Netzen (Corporate Network - auch Virtual Private Network (VPN) genannt) meist durch räumliche Abschottung der Netze bewirkt, da man in diesen Netzen nur Teilnehmer findet, die von vornherein berechtigt sind (sog. 'friendly users').

Das zur Zeit bekannteste Datennetz ist das Internet. Das Internet ist als offenes (Weitverkehrs-) Datennetz mit offenen Schnittstellen zur Verbindung von (zumeist lokalen und regionalen) Datennetzen unterschiedlicher Hersteller konzipiert. Das Hauptaugenmerk liegt deshalb bisher auf der Bereitstellung einer hersteller-unabhängigen Transportplattform. Adäquate Mechanismen zur Garantie von Dienstgüte und Sicherheit spielen eine nebengeordnete Rolle. Zur Zeit wird eine erhöhte Sicherheit deshalb vor allem mit dezentralen, an den Schnittstellen zum Internet platzierten Filtereinrichtungen - auch 'Firewalls' genannt - realisiert. Netzinterne Dienstgüte- und Sicherheitsmechanismen sind jedoch noch kaum vorhanden.

Im Zuge der Konvergenz von leitungsorientierten Sprach- und paketorientierten Datennetzen werden Sprachübermittlungsdienste und zukünftig auch breitbandigere Dienste wie z.B. Übermittlung von Bewegtbildinformationen, ebenfalls in paketorientierten Datennetzen realisiert, d.h. die Übermittlung der bisher üblicherweise leitungsorientiert übermittelten Echtzeitdienste erfolgt in einem konvergenten Sprach-Daten-Netz paketorientiert, d.h. in Paketströmen. Diese werden auch 'Echtzeitpaketströme' genannt. Hierbei ergibt sich das Problem, dass für eine paketorientierte Realisierung eines Echtzeitdienstes eine hohe Dienstgüte erforderlich ist, damit diese mit einer leitungsorientierten Übermittlung qualitativ vergleichbar ist, während zeitgemäße Datennetze und insb. das Internet keine adäquaten Mechanismen zur Garantie einer hohen Dienstgüte vorsehen.

Im folgenden sei auf die Übermittlung von multimedialen Informationen (z.B. Audio oder Video) im Internet fokussiert. Dies stellt jedoch keine wesentliche Einschränkung dar, denn die Dienstgüte-Anforderungen sind nicht speziell für das Internet ausgebildet, sondern gelten allgemein für alle Typen von Datennetzen. Sie sind unabhängig von der konkreten Ausgestaltung eines Datennetzes. Die Pakete können folglich als Internet-, X.25- oder Frame-Relay-Pakete, aber auch als ATM-Zellen ausgebildet sein. Sie werden zuweilen auch als 'Nachrichten' bezeichnet, v.a. dann, wenn eine Nachricht in einem Paket übermittelt wird. Datenpaketströme und Echtzeitpaketströme sind hierbei Ausführungsbeispiele von in Kommunikationsnetzen übermittelten Verkehrsströmen. Verkehrsströme werden auch als 'Verbindungen' bezeichnet, und zwar auch in paketorientierten Netzen, in denen eine verbindungslose Übermittlungs-Technik zum Einsatz kommt. Beispielsweise erfolgen Informationsübermittlung bei TCP/IP mit Hilfe von sog. Flows, durch die Sender und Empfänger (z.B. Web Server und Browser) trotz des verbindungslosen Charakters von IP auf logisch abstrakter Ebene miteinander verbunden werden, d.h. logisch abstrahiert stellen auch Flows Verbindungen dar.

Für die Übermittlung von Sprach- und Bildinformationen über ein paketorientiertes IP-Netz (bspw. das Internet) - auch 'VoIP' genannt - sind in den internationalen Standardisierungsgremien IETF (Internet Engineering Task Force) und ITU (International Telecommunications Union) mehrere Architekturen beschrieben. Allen ist gemeinsam, dass die Call Control Ebene und die Resource Control Ebene funktional voneinander getrennt werden.

Die Call Control Ebene umfasst einen (optionalen) Call Controller, dem u.a. folgende Funktionen zugeordnet sind:
- Address Translation: Umsetzung von E.164 Telephonnummern und anderen Alias Adressen (z.B. Rechnernamen) auf Transportadressen (z.B. Internetadressen).
- Admission Control (optional): Grundsätzliche Zulässigkeitsprüfung, ob und in welchem Umfang (z.B. VoIP fähige) Einrichtungen das Kommunikationsnetz nutzen dürfen.
- Bandwidth Control (optional): Verwaltung von Übermittlungskapazitäten.
- Zone Management: Registrierung von (z.B. VoIP fähigen) Einrichtungen und Bereitstellung obiger Funktionen für alle beim Call Controller registrierten Einrichtungen.

Optional können einem Call Controller zudem folgende Funktionen fallweise zugeordnet werden:
- Call Control Signalling: Alle Signalisierungsnachrichten werden von zumindest einem Call Controller vermittelt, d.h. alle Einrichtungen schicken und erhalten Signalisierungsnachrichten nur über den Call Controller. Ein direkter Austausch von Signalisierungsnachrichten zwischen den Einrichtungen ist untersagt.
- Call Authorization: Zulässigkeitsprüfung für eingehende und ausgehende Calls.
- Bandwidth Management: Steuerung der zulässigen Anzahl von Einrichtungen, die gleichzeitig das Kommunikationsnetz nutzen dürfen.
- Call Management: Verwaltung einer Liste bestehender Gespräche, um z.B. ein Besetzzeichen erzeugen zu können, falls dies von der Einrichtung selbst nicht erzeugt werden kann.
- Alias Address Modification: Rückgabe einer modifizierten Alias Adresse, bspw. mit einer H.225.0 (vollständige Referenz a.a.O.) Nachricht ACF (Admission Confirm). Diese Adresse muss der Endpunkt beim Verbindungsaufbau verwenden.
- Dialed Digit Translation: Übersetzung der gewählten Ziffern in eine E.164 Telephonnummer oder eine Nummer aus einem privaten Nummerierungsschema.

Beispiele für Call Controller stellen der von der ITU in der H.323 Standard Familie vorgeschlagene 'Gatekeeper' oder der von der IETF vorgeschlagene 'SIP-Proxy' dar. Wird ein größeres Kommunikationsnetz in mehrere Domänen - auch 'Zonen' genannt - gegliedert, kann in jeder Domäne ein separater Call Controller vorgesehen werden. Eine Domäne kann auch ohne einen Call Controller betrieben werden. Sind mehrere Call Controller in einer Domäne vorgesehen, soll nur ein einziger von diesen aktiviert sein. Ein Call Controller ist aus logischer Sicht getrennt von den Einrichtungen zu sehen. Physikalisch muss er jedoch nicht in einer separaten Call Controller Einrichtung realisiert sein, sondern kann auch in jedem Endpunkt einer Verbindung (bspw. ausgebildet als H.323 Endpunkt: Endgerät, Gateway, Multipoint Control Unit, etc.) oder auch einer zur programmgesteuerten Datenverarbeitung ausgebildeten Einrichtung (beispielsweise: Rechner, PC, usw.) vorgesehen werden. Auch eine physikalisch verteilte Realisierung ist möglich.

Die Resource-Control-Ebene umfasst als zentrales Element einen Resource-Controller, dem u.a. folgende Funktionen zugeordnet sind:
- Capacity Control: Steuerung des dem Kommunikationsnetz durch Paketströme zugeführten Verkehrsvolumens, z.B. durch Kontrolle der Übermittlungskapazität einzelner Paketströme.
- Policy Activation (optional): ggf. für einen priorisierten Paketstrom Resourcen im Kommunikationsnetz für dessen Übermittlung reservieren.
- Priority Management (optional): Prioritätskennzeichen in den Paketen entsprechend der Priorität ihrer Paketströme setzen, kontrollieren und gegebenenfalls korrigieren, falls die Pakete bereits mit Prioritäten gekennzeichnet sind.

Der Resource Controller wird auch als 'Policy Decision Point (PDP)' bezeichnet. Er ist häufig innerhalb von sog. 'Edge Routern' - auch 'Edge Devices', 'Zugangsknoten' oder bei Zuordnung zu einem Internet Service Provider (ISP) 'Provider Edge Router (PER)' genannt - realisiert. Alternativ kann der PER auch nur als Proxy fungieren und Resource Controller relevante Informationen an einen separaten Server weiterleiten, auf dem der Resource Controller realisiert ist.

Das prinzipielle Zusammenwirken von Call Controller und Resource Controller gemäß den Protokollen der IETF und ITU (siehe H.323 Draft v4 (07/2000), Appendix II) sei am Beispiel eines Call Setup zwischen zwei als Teilnehmerendgeräte ausgebildeten VoIP Einrichtungen erläutert.

Innerhalb oder teilweise auch zeitlich vor dem eigentlichen Call Setup laufen bei Einwahl eines Endgeräts in das IP-Netz (z.B. über einen Internet Service Provider) die Schritte Authentisierung, Autorisierung und (Start des) Accounting ab. Diese sogenannte 'AAA' Funktionalität wird üblicherweise durch den Zugriff auf eine Subscriber-Datenbank, in der alle Nutzer mit ihren Kennungen, Passwörtern, Rechten, etc. gespeichert sind, realisiert. Dieser Zugriff ist langsam und vergleichsweise komplex. In den heutigen "Best Effort" IP Netzen findet dieser AAA Vorgang normalerweise ein Mal während des Einwählens des Nutzers statt. Eine weitere Authentisierung erfolgt bei Einsatz eines Call Controllers, wenn sich das Endgerät beim Call Controller (z.B. einem SIP Proxy oder einem H.323 Gatekeeper) des Internet Service Providers registriert. Nach dem H.323 Draft v4 (07/2000) wird diese Authentisierung bzw. Registrierung eines Endgeräts beim zugeordneten Gatekeeper gemäß dem RAS (Registration, Admission, Status) Protokoll durchgeführt. Das RAS Protokoll ist im ITU-Standard H.225.0 (vollständige Referenz a.a.O.) beschrieben.

Der eigentliche Call Setup beginnt üblicherweise damit, dass in einem ersten Schritt die Endgeräte der Teilnehmer ihre Fähigkeiten (z.B. Liste der unterstützten Codecs) austauschen, um die benötigten Ressourcen (z.B. Bandbreite) und die geforderte QoS (z.B. Delay, Jitter) zu bestimmen. Die Endgeräte sind bei Sprachtelephonie z.B. als IP-Telephone ausgebildet, bei Online-Video wäre eines der Endgeräte ein Content- bzw. Application-Server, z.B. im Netz des Internet Service Providers (ISP).

Der Austausch der Signalisierungsnachrichten erfolgt entweder direkt zwischen den Endgeräten oder unter Vermittlung zumindest eines Call Controllers. Hierbei ist bei jedem Call für jedes Endgerät und für jede Übertragungsrichtung individuell festgelegt, welche Variante zum Einsatz kommt. Die erste Variante wird z.B. in der H.323 Draft v4 (07/2000) als 'Direkt Endpoint Call Signalling' und die zweite als 'Gatekeeper Routed Call Signalling' bezeichnet. Bei Direct Endpoint Call Signalling können an einen Call Controller ggf. Kopien ausgewählter Signalisierungsnachrichten übermittelt werden. Ein Call-Controller hat somit häufig Kenntnis von den zwischen den Endgeräten abgestimmten Ressourcen- und QoS-Anforderungen. Diese Anforderungen werden jedoch von ihm selbst nicht aktiv beeinflusst oder verifiziert.

In einem zweiten, optionalen Schritt kann die derart abgestimmte Ressourcen- und QoS-Anforderung direkt von den Endgeräten der Teilnehmer an ihren zugeordneten Resource Controller übermittelt werden. Nach Prüfung der Ressourcen- und QoS-Anforderung wird von dem Resource Controller eine Bestätigung (oder Ablehnung) an das Endgerät zurückgeschickt.

In einem dritten, ebenfalls optionalen Schritt wird im Edge Router und gegebenenfalls weiteren Routern im Netz eine 'Policy' aktiviert, mit der diese Router prüfen und gewährleisten, dass der vom Endgerät verursachte Verkehr innerhalb der Grenzen liegt, die in der Anforderung spezifiziert wurden. Ein Beispiel für einen derartigen Reservierungsmechanismus ist RSVP (Resource reSerVation Protocol).

Zur Durchführung der drei Schritte wird eine Mehrzahl von Nachrichten versendet, die lediglich zur Abstimmung der beteiligten Komponenten untereinander, jedoch nicht zur Übermittlung der "eigentlichen Informationen" zwischen den Endgeräten dienen. Diese mit den Nachrichten übermittelten Informationen werden üblicherweise als 'Signalisierungsinformationen', 'Signalisierungsdaten' bzw. schlicht als 'Signalisierung' bezeichnet. Der Begriff ist dabei weit zu verstehen. So sind z.B. neben den Signalisierungsnachrichten auch die Nachrichten gemäß dem RAS Protokoll, die Nachrichten gemäß dem ITU-Standard H.245 zur Steuerung von Nutzkanälen bestehender Gespräche sowie alle weiteren ähnlich ausgebildeten Nachrichten umfasst. Das Signalisierungsprotokoll für den Verbindungsaufbau (Call Setup) und -abbau (Call Release) nach der ITU ist z.B. im Standard H.225.0, "Media Stream Packetization and Synchronisation on Non-Guaranteed QoS LANs", 2000 beschrieben, das nach der IETF im RFC 2453bis, "SIP: Session Initiation Protocol", draft-ietf-sip-rfc2453bis-02.txt, 09/2000. Die "eigentlichen Informationen" werden zur Unterscheidung von der Signalisierung auch 'Nutzinformationen', 'Medieninformationen', 'Mediendaten' oder schlicht 'Medien' genannt.

In diesem Zusammenhang versteht man unter 'out-of-band' die Übermittlung von Informationen auf einem anderen Weg / Medium als den im Kommunikationsnetz zur Übermittlung von Signalisierungs- und Nutzinformationen vorgesehenen Wegen. Insbesondere ist hiervon eine lokale Konfiguration von Einrichtungen vor Ort umfasst, die z.B. mit einer lokalen Steuereinrichtung vorgenommen wird. Demgegenüber werden bei 'in-band' Informationen auf dem gleichen Weg / Medium, ggf. logisch getrennt von den betrachteten Signalisierungs- und Nutzinformationen, übermittelt.

Aufgrund des bisher Ausgeführten wird klar, dass eine Realisierung von VoIP bei den Teilnehmern nur dann breite Akzeptanz finden wird, wenn die zugehörigen Signalisierungsdaten sowie die als Sprache ausgebildeten Mediendaten im integrierten Sprach-Daten-Netz mit gleicher Dienstgüte übermittelt werden wie im Sprachnetz. Hierbei kann einem Teilnehmer zwar von einem Betreiber eine gewisse Dienstgüte vorab zugesagt werden. In einem integrierten Sprach-Daten-Netz sind jedoch grundsätzlich alle Verkehrsströme von Schwankungen der Netzbelastung betroffen, weshalb die zugesagte Dienstgüte bei hoher Netzlast prinzipiell unterschritten werden könnte. Hilfreich könnte in diesem Zusammenhang eine erfindungsgemäße, am besten kontinuierliche Erfassung von Daten zur Kennzeichnung der tatsächlichen Dienstgüte jeder VoIP Übermittlung sein, da so im Streitfall nachvollziehbare Daten zur Beurteilung der tatsächlichen Dienstgüte von strittigen VoIP Übermittlungen bereitstehen.

Eine derart umfangreiche und aufwändige Erfassung von Qualitätsdaten kann jedoch weder mit den in den Standards und Drafts der IETF und/oder ITU vorgeschlagenen Mitteln, noch mit bekannten oder bekannt gewordenen Implementierungen und Lösung technisch adäquat gelöst werden.

Bekannt ist eine fallweise Erfassung mit Hilfe von Messgeräten. Messgeräte im Netz werden im allgemeinen als Sniffer oder Probing-Systeme bezeichnet, die Informationsübermittlungen überwachen und bei aktiven Systemen direkt Informationen in das Netz zur Messung der tatsächlichen Dienstgüte einspeisen. Für VoIP existieren auch Messgeräte, die als Endgeräte fungieren, Informationsübermittlungen initiieren und die Übertragungsqualität der Informationsübermittlung messen. Natürlich können damit nur Stichproben erfolgen, außerdem hilft dieses Verfahren nicht bei Beschwerden von Kunden über ihr Endgerät, ihren speziellen Netzzugang und insb. ihre subjektiv erfahrene tatsächliche Dienstgüte. In diesem Fall müsste ein Service-Techniker z.B. vor Ort das Endgerät des Teilnehmers durch ein Messgerät ersetzen, um sodann als Reaktion auf die Beschwerde des Kunden Qualitätsdaten zu erheben. Rückschlüsse auf Qualitätseinbußen in der Vergangenheit, z.B. infolge überhöhter Netzlast (auch 'Stau im Netz' genannt) sind bei diesem Verfahren nicht möglich. Auch kann hiermit nicht nachgewiesen werden, dass die tatsächliche Dienstgüte kontinuierlich einer zugesagten Dienstgüte entspricht bzw. entsprochen hat.

Weiterhin ist bekannt, an (netzinternen) Zwischenpunkten einer Informationsübermittlung Qualitätsdaten zu erheben, z.B. an Schnittstellen (auch 'Gateways' genannt) zwischen Netzen (z.B. einer Schnittstelle zwischen einem leitungsorientierten Sprachnetz und einem paketorientierten, integrierten Sprach-Daten-Netz) oder an Konzentrationspunkten (auch 'Multiplexer' genannt), an denen eine Vielzahl von Informationsübermittlungen durch statisches oder statistisches Multiplexing zu einem höherbitratigen Informationsstrom zusammengefasst wird, um in einem gemeinsamen Kanal übermittelt zu werden. Im RFC2705 der IETF (Internet Engineering Task Force), Arango et al, "Media Gateway Control Protocol (MGCP)", 10/1999, Kap. 2.3.5 ist hierzu vorgeschlagen, dass von einem Zwischenknoten einer Informationsübermittlung für jeden von ihm übermittelten Informationsstrom nach Abschluss der Informationsübermittlung bestimmte statistische Daten an einen zugeordneten Call Agent übermittelt werden sollen. Den Daten kommt hierbei gemäß RFC1889, Schulzrinne et al, "RTP: A Transport Protocol for Real-Time Applications", 01/1996, Kapitel 6, "RTP Control Protocol - RTCP", als Hauptfunktion die Unterstützung einer Fluss- und Überlastkontrolle zu. Nach RFC1889, Kap. 6.3.4 ist der Einsatz dieser Daten gezielt auf folgende Wirkungen ausgerichtet:
- Ein Sender soll während der Informationsübermittlung sein Sendeverhalten in Abhängigkeit von den empfangenen statistischen Daten anpassen können (Fluss- und Überlastkontrolle).
- Ein Empfänger soll ableiten können, ob ein Problem von einer lokalen, regionalen oder einer globalen Ursache herrührt (Fehlerlokalisation).
- Ein Netzmonitor soll in Abhängigkeit von den statistischen Daten die Leistungsfähigkeit des Netzes zur Informationsübermittlung bewerten können (Netzperformance). Der Fokus liegt hierbei auf dem Netz als ganzem, jedoch nicht auf einzelnen Informationsübermittlungen.

Es findet sich weder im RFC2705, noch im RFC1889 ein Hinweis, diese Daten zur Kennzeichnung der Dienstgüte einer Informationsübermittlung zu nutzen, insb. zu speichern. Außerdem skaliert dieses Verfahren nicht, da der Aufwand in den bspw. als Gateways oder Multiplexer ausgebildeten Zwischenknoten linear mit der Anzahl der übermittelten Informationsströme ansteigt. Wegen seiner Anwendung in Zwischenknoten ist es vor allem auf eine netzinterne Steuerung der Performance eines Netzes als ganzem durch Fluss- und Überlaststeuerung einzelner Informationsströme ausgerichtet, jedoch nicht auf die Kennzeichnung der Dienstgüte einzelner Informationsübermittlungen für sich genommen. Zudem ist bei getrennter Führung der Informationsströme einer bidirektionalen Informationsübermittlung primär lediglich eine unidirektionale Messung möglich. Für ein bidirektionales Messergebnis ist dann ein nachgeordneter Verarbeitungsschritt erforderlich.

Eine Aufgabe der Erfindung liegt darin, einen Weg aufzuzeigen, der ein effizientes, kontinuierliches Erfassen von Daten zur Kennzeichnung der tatsächlichen Dienstgüte von jeder Informationsübermittlung in einem Kommunikationsnetz ermöglicht.

Diese Aufgabe wird durch die Merkmale von Anspruch 1 gelöst. Weitere vorteilhafte Ausgestaltungen der Erfindung ergeben sich aus den unter- oder nebengeordneten Ansprüchen.

Mit der Lösung nach Anspruch 1 ist eine Vielzahl von neuen, unerwarteten, vorteilhaften, technischen Wirkungen verbunden:
- Durch Erfassung der Daten von dem Endpunkt selbst skaliert die Lösung. Pro Endpunkt müssen nur Daten zu den dem Endpunkt jeweils zugeordneten Informationsübermittlungen erfasst werden. Weiterhin sind in einem Endgerät- im Unterschied zu einem Zwischenknoten - üblicherweise nur eine begrenzte und zudem meist weitgehend konstante Anzahl von Endpunkten zusammengefasst (bei einem H.323 Endgerät z.B. je einer für Hin- und Rückrichtung von Audio und Video, einer für H.245 Signalisierung und einer für H.225.0 Signalisierung zum zugeordneten Gatekeeper). Ein Anstieg der Anzahl von Informationsübermittlungen in einem Netz erfolgt üblicherweise durch einen Anstieg der Anzahl von an das Netz angeschlossenen Endgeräten, jedoch nicht durch einen (signifikanten) Anstieg der Endpunkte pro Endgeräte, so dass die durch die erfindungsgemäße Datenerfassung und -übermittlung verursachte Last pro Endgerät weitgehend gleichmäßig, d.h. konstant, bleibt.
- Auch bei getrennter Führung der Informationsströme einer bidirektionalen Informationsübermittlung auf verschiedenen Wegen eines Netzes ist grundsätzlich ein bidirektionales Messergebnis möglich, da in dem Endpunkt üblicherweise die beiden Informationsströme zusammenlaufen und somit die Notwendigkeit einer nachträglichen Korrelation unidirektionaler Messergebnisse der beiden Übermittlungsrichtungen zu einem bidirektionalen Messergebnis entfällt.
- Durch Erfassung der Daten im Endpunkt einer Informationsübermittlung kann die im Endpunkt vorliegende tatsächliche Dienstgüte kontinuierlich gemessen und durch Speicherung der Daten auch jederzeit nachgewiesen werden. Ein Nachweis der tatsächlichen Dienstgüte ist essentiell für die Akzeptanz der von IETF und ITU vorgeschlagenen Konzepte, da hierdurch den Teilnehmern transparent gemacht werden kann, dass eine ihnen garantierte Dienstgüte nicht nur versprochen, sondern auch tatsächlich zur Verfügung gestellt wird.
- Die Erfindung ist generisch und konzeptionell interoperabel, da sie unabhängig von einer konkreten Lösung ist. Dies macht die Erfindung zu einer umfassenden Lösung für Kommunikationsnetze an sich. Sie lässt sich insb. sowohl auf H.323 Netze als auch auf SIP Netze anwenden. Dies ist wichtig und somit besonders vorteilhaft, da, wie die Vergangenheit gezeigt hat, der Markt herstellerspezifischen Lösungen wenig Akzeptanz entgegenbringt.

Mit einem Gegenstand, bei dem die Instanz bei einem eine Call Control Ebene und eine Resource Control Ebene umfassenden Kommunikationsnetz in der Call Control Ebene angeordnet, insb. einem in der Call Control Ebene vorgesehenen Call Controller zugeordnet ist, ist die vorteilhafte Wirkung verbunden, dass für die Endpunkte die Notwendigkeit einer separaten Adressierung der Instanz entfällt, da stattdessen die bereits vorhandene Adresse des Call Controllers verwendet werden kann. Somit entfällt auch eine ansonsten erforderliche Konfiguration der Adresse der Instanz in den Endgeräten, denen die jeweiligen Endpunkte zugeordnet sind.

Eine besonders schöne, vorteilhafte Wirkung ergibt sich für einen Gegenstand, bei dem die Daten zusammen mit weiteren Daten zur Vergebührung der Informationsübermittlung gespeichert werden. Hierbei kann jede einzelne Vergebührung ohne aufwändige, nachträgliche Verknüpfung mit ggf. separat geführten Daten bzgl. ihrer tatsächlichen Dienstgüte gegenüber den Kunden nachgewiesen werden, wodurch insb. das Vertrauen der Teilnehmer in die prinzipiell schwankender Dienstgüte unterworfenen integrierten Sprach-Daten-Netze gestärkt wird. Dieser Nachweis kann wegen der direkten Verknüpfung äußerst effizient bewirkt werden.

Vorteilhaft entfällt bei einem Gegenstand, bei dem die Daten bei einer bidirektionalen Informationsübermittlung die Dienstgüte beider Übermittlungsrichtungen kennzeichnen jegliche nachträgliche Korrelation unidirektionaler Messergebnisse der beiden Übermittlungsrichtungen zu einem bidirektionalen Messergebnis.

Bei einem Gegenstand, bei dem die Daten nach der Informationsübermittlung an die Instanz übermittelt werden, sind der Aufwand für die Übermittlung der Informationen und der Aufwand für die Übermittlung der Daten zeitlich entkoppelt, wodurch der Endpunkt vorteilhaft insbesondere während der zumeist vergleichsweise aufwändigen Informationsübermittlung nicht durch eine zusätzliche Übermittlung belastet wird.

Mit dem Gegenstand, bei dem die Daten von dem Endpunkt an die Instanz z.B. als projektspezifische Elemente in vorhandenen, standardisierten Signalisierungsnachrichten, insbesondere Nachrichten zur Anzeige des Abschlusses der Informationsübermittlung übermittelt werden, ist die vorteilhafte Wirkung verbunden, dass die Lösung standardkonform ist, keine zusätzlichen proprietären Protokolle oder Nachrichten erforderlich sind. Des weiteren werden die zusätzlich eingefügten Daten keine Auswirkung auf Netzelemente haben (Transparenz), die nicht an dieser Technik beteiligt sind: diese reagieren wie bisher nur auf den ursprünglichen Anteil der Meldungen (Interoperabilität mit Legacy-Netzelementen).

Bei einem alternativen Gegenstand, bei dem die Daten von dem Endpunkt an die Instanz in zumindest einer zusätzlichen, separaten Nachricht übermittelt werden, liegt die vorteilhafte Wirkung darin, dass die vorhandenen, standardisierten Nachrichten überhaupt nicht modifiziert werden, was insb. dann sehr wichtig ist, wenn in diesen Nachrichten keine zusätzlichen, ggf. proprietären Protokollelemente vorgesehen sind.

Die Erfindung wird im folgenden anhand von Ausführungsbeispielen, die in den Figuren dargestellt sind, näher erläutert. Es zeigt hierbei:
- Figur 1: eine Anordnung zur Durchführung des erfindungsgemä-ßen Verfahrens mit einer Call Control Ebene, einer Resource Control Ebene sowie zwei Endpunkten einer Informationsübermittlung
- Figur 2: eine beispielhaft detaillierter ausgeführte Ausgestaltung der Anordnung nach Figur 1 mit Computerprogrammprodukten zur Durchführung des erfindungsgemä-ßen Verfahrens

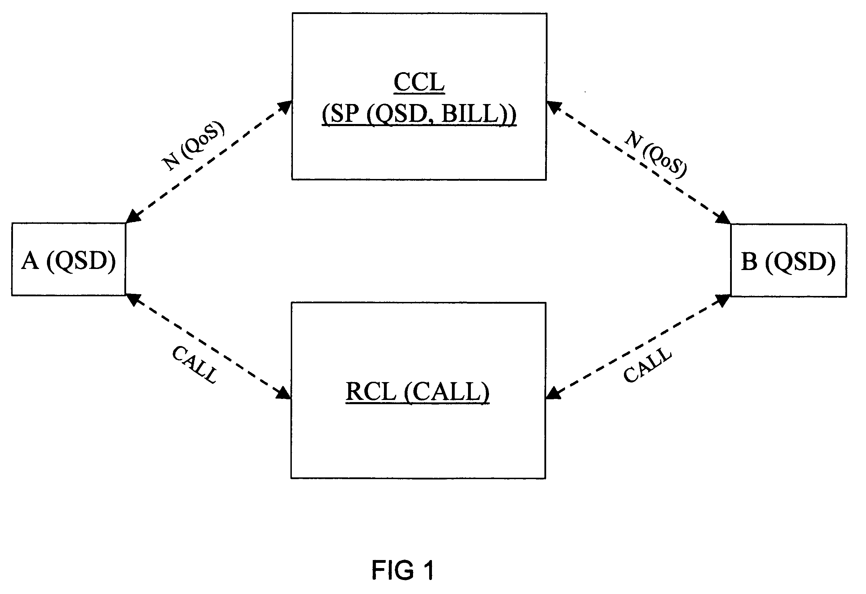

In Figur 1 ist eine beispielhafte Anordnung zur Durchführung des erfindungsgemäßen Verfahrens dargestellt, die als Kommunikationsnetz mit einer Call Control Ebene CCL, einer Resource Control Ebene RCL sowie zwei Endpunkten A, B einer Informationsübermittlung ausgeführt ist. Eine separate Instanz SP zur Speicherung von Daten QSD, BILL ist in der Ebene CCL angeordnet. Zwischen den Endpunkten A, B ist eine Informationsübermittlung CALL dargestellt, die von der Ebene RCL vermittelt wird und zu der in den Endgeräten A, B die Daten QSD zur Kennzeichnung der Dienstgüte der Informationsübermittlung CALL erfasst werden. Weiterhin sind zwischen den Endgeräten A, B und der Ebene CCL Nachrichten N dargestellt, mit denen die erfassten Daten QSD an die Instanz SP übermittelt werden.

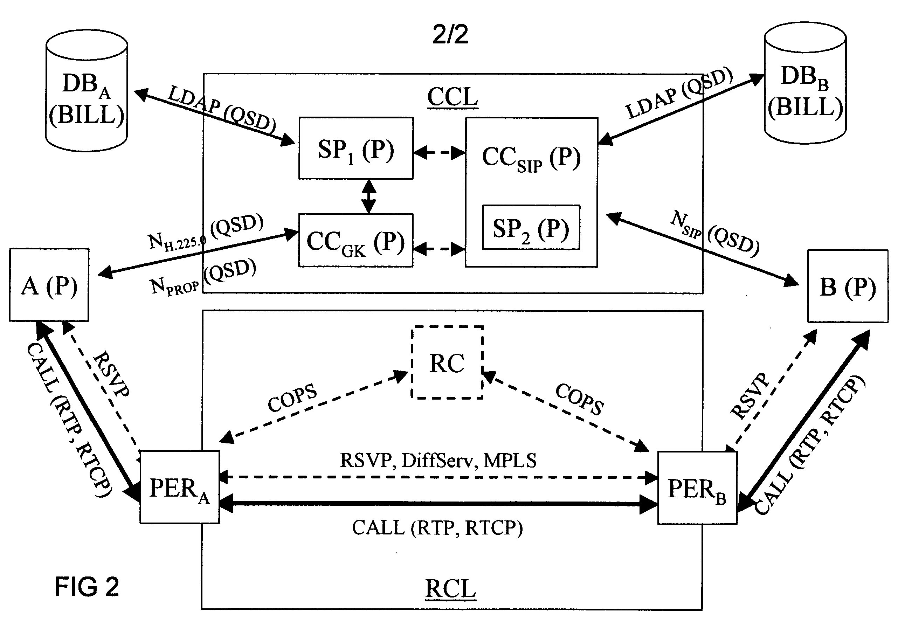

In Figur 2 ist eine detailliertere Ausgestaltung der Anordnung nach Figur 1 dargestellt. Es sei betont, dass die hierbei aufgezeigten Ausführungen trotz ihrer teilweise sehr konkreten Darstellung lediglich beispielhafter Natur und nicht einschränkend zu verstehen sind. In dieser Ausgestaltung umfasst die Ebene CCL zwei Call Controller CC, wobei der dem Endpunkt A zugeordnete Call Controller CC als Gatekeeper CC_{GK} und der dem Endpunkt B zugeordnete Call Controller CC als SIP-Proxy CC_{SIP} ausgebildet ist. Weiterhin sind zwei Ausgestaltungen SP₁, SP₂ der separaten Instanz SP dargestellt. Die erste ist als extern realisierte separate Instanz SP₁ ausgebildet, die dem Gatekeeper CC_{GK} zugeordnet ist. Sie könnte auch dem SIP-Proxy CC_{SIP} zugeordnet werden und als einzige Instanz SP in der Ebene CCL fungieren. Diese potentielle Relation ist durch einen gestrichelten Pfeil zwischen der Instanz SP₁ und dem SIP-Proxy CC_{SIP} angedeutet. Die zweite ist als integriert realisierte separate Instanz SP2 ausgebildet, die in den SIP-Proxy CC_{SIP} integriert ist. Der ersten Instanz SP₁ ist eine Datenbank DB_{A} und der zweiten Instanz SP₂ eine Datenbank DB_{B} zur Speicherung der Daten QSD, BILL zugeordnet, wobei im zweiten Fall die Zuordnung über den SIP-Proxy CC_{SIP} erfolgt. Auf die Datenbanken DB wird z.B. mit dem Protokoll LDAP (Lightweight Directory Access Protocol) zugegriffen. Zwischen den beiden Call Controllern CC werden ggf. Signalisierungsnachrichten N ausgetauscht.

Die Ebene RCL umfasst einen zentralen Resource Controller RC. Diesem sind zwei Edgerouter PER_{A}, PER_{B} zur Übermittlung von Informationen in einem Kommunikationsnetz zugeordnet. Zwischen dem Resource Controller RC und den Edgeroutern PER kommt ein Protokoll COPS (Common Open Policy Service) zum Einsatz. Weiterhin kommt zwischen dem Endpunkt A und dem Gatekeeper CC_{GK} ein Protokoll H.225.0, zwischen dem Endpunkt A und dem Edgedevice PER_{A} sowie dem Endpunkt B und dem Edgedevice PER_{B} ein Protokoll RSVP (Resource Reservation Protocol) und zwischen dem Endpunkt B und dem SIP-Proxy CC_{SIP} ein Protokoll SIP (Session Initiation Protocol) zur Anwendung. In den standardisierten Nachrichten N_{H.225.0}, N_{SIP} der Protokolle H.225.0, SIP, RSVP werden jeweils auch die Daten QSD übermittelt. Alternativ könnten die Daten QSD wie angedeutet in zusätzlichen, ggf. nicht standardisierten Nachrichten N_{PROP} übermittelt werden. Zwischen den Edgedevices PER_{A} und PER_{B} kommt z.B. eines der Protokolle RSVP, DiffServ, MPLS oder COPS zur Reservierung von Ressourcen zum Einsatz. Zwischen den Endpunkten A und B ist ein Gespräch CALL aufgezeigt. Die Informationen werden im Kommunikationsnetz durch ein Protokoll RTP (Real Time Protocol) übermittelt. Gemäß einem parallel zu dem Protokoll RTP eingesetzten Protokoll RTCP (Real Time Control Protocol) werden hierbei auch für die Daten QSD erfindungsgemäß ausgewertete Steuergrößen zwischen den beiden Endpunkten A, B übermittelt.

Das Kommunikationsnetz ist beispielsweise als IP-Netz ausgebildet. Für den einschlägigen Fachmann ist offensichtlich, dass die Erfindung selbstverständlich in weiteren Netztypen zum Einsatz kommen kann wie z.B. Internet, Intranet, Extranet, einem lokalen Netz (Local Area Network - LAN) oder einem, z.B. als Virtuelles Privates Netz (VPN) ausgebildeten firmeninternen Netz (Corporate Network).

In den Endgeräten A und B, den Call Controllern CC und den Edgedevices PER sind erfindungsgemäße Computerprogrammprodukte P vorgesehen, die jeweils Softwarecodeabschnitte zur prozessorgestützten Ausführung des erfindungsgemäßen Verfahrens umfassen. Optional können dabei Teile der Computerprogrammprodukte P auch auf spezieller Hardware (z.B. Krypto-Prozessoren) ablaufen.

Im weiteren wird als Beispiel das erfindungsgemäße Verhalten und Zusammenwirken der Call Controller CC, der Endpunkte A, B und der Instanz bzw. Instanzen SP im Rahmen einer Informationsübermittlung CALL ausgeführt. Im weiteren wird hierbei die Informationsübermittlung CALL auch als Gespräch CALL bezeichnet.

Zunächst wird das Endgerät A bei dem Gatekeeper CC_{GK} registriert. Die Registrierung wird von dem Endgerät A durch einen H.225.0 Registration Request RRQ beantragt und von dem Gatekeeper CC_{GK} mit einer H.225.0 Registration Confirm RCF oder mit einer H.225.0 Registration Reject RRJ beantwortet. Vom Gatekeeper CC_{GK} wird dann der Endpunkt A verifiziert, d.h. authentisiert, autorisiert, etc... Hierzu wird auf nutzerspezifische Daten, die z.B. in einer Datenbank DB_{A} abgelegt sind, mit Hilfe des Protokolls LDAP oder eines anderen DB-Abfrageprotokolls zugegriffen. Weiterhin wird vom Gatekeeper CC_{GK} auch festgelegt, ob das Call Signalling von ihm selbst vermittelt werden soll (Gatekeeper Routed Call Signalling) oder direkt zwischen den Endpunkten A, B (Direct Endpoint Call Signalling), ggf. mit Benachrichtigung an den Gatekeeper CC_{GK} zu wesentlichen Änderungen. Auf analoge Weise wird das Endgeräte B bei dem SIP-Proxy CC_{SIP} registriert.

Nach Registrierung beider Endpunkte A, B ist ein Call Signalling, insb. ein Call Setup, zwischen den beiden Endgeräten A, B grundsätzlich möglich. Dieser wird z.B. von dem Endpunkt A initiiert, indem mit einem H.225.0 Admission Request ARQ der Aufbau des Gesprächs CALL zum Endpunkt B beim Gatekeeper CC_{GK} beantragt wird. Dieser ARQ könnte auch eine QoS Anforderung enthalten. Vom Gatekeeper CC_{GK} wird hierauf eine auf das Gespräch CALL bezogene Authentisierung und Autorisierung durchgeführt. Diese umfasst auch eine Bewertung der QoS Anforderung. Diese kann z.B. durch eine mittels weiterer H.225.0 Nachrichten bewirkte Capability Negotiation zwischen den beiden Endpunkten A, B ermittelt werden. Beim Gatekeeper Routed Call Signalling ist diese dann dem Gatekeeper CC_{GK} unmittelbar bekannt. Beim Direct Endpoint Call Signalling könnte sie dem Gatekeeper CC_{GK} mitgeteilt werden. Optional wird vom Gatekeeper CC_{GK} eine Vergebührung des Gesprächs CALL gestartet, wobei weitere Daten BILL erzeugt werden. Falls das Endgerät B das Gespräch CALL annimmt, wird dies dem Gatekeeper CC_{GK} durch eine Nachricht CONNECT angezeigt.

Im Anschluss wird vom Endpunkt A eine RSVP QoS Anforderung an das Edgedevice PER_{A} übermittelt. Sofern nicht bereits zuvor zwischen Gatekeeper CC_{GK} und Resource Controller RC eine Abstimmung stattgefunden hat, wird nun vom Edgedevice eine weitere Verifikation der QoS Anforderung durchgeführt. Hierzu wird z.B. über das standardisierte Protokoll COPS eine Abfrage an den Resource Controller RC gesendet. Dieser prüft, ob die angeforderte QoS im Kommunikationsnetz bereitgestellt werden kann. Der Resource Controller RC kennt hierzu die gesamten vorhandenen (bzw. belegten) Ressourcen im Kommunikationsnetz, um eine Antwort auf die COPS Abfrage senden zu können.

Nach Empfang der Antwort des Resource Controllers RC reagiert das Edgedevice PER_{A} wie folgt: Entweder wird die QoS Anforderung wegen Überlast im Kommunikationsnetz abgelehnt oder die angeforderte QoS wird im Kommunikationsnetz konfigurativ eingestellt, z.B. durch dynamische Aktivierung einer Policy oder alternativ zur RSVP Terminierung im Edgedevice PER_{A} durch Weiterleiten der RSVP Reservierung durch das Netz bis zum anderen Edgedevice PER_{B} oder Endpunkt B.

Nach Erhalt einer positiven RSVP Antwort vom Edgedevice PER_{A} beginnt der Endpunkt A mit der Informationsübermittlung. Spätestens jetzt wird die Vergebührung aktiviert. Hierbei werden die Mediendaten z.B. entsprechend dem Protokoll RTP übermittelt. Während des Gesprächs CALL werden auch zusätzliche Daten zur Flusssteuerung des Gesprächs CALL entsprechend dem Protokoll RTCP übermittelt und es werden in den Endgeräten A, B die Daten QSD unter Berücksichtigung der eigentlich der Flusssteuerung dienenden Signalisierungsdaten des Protokolls RTCP erfasst. Wegen des bidirektionalen Charakters eines Gesprächs CALL können hierbei die im Endpunkt A, B erfassten Daten QSD die Dienstgüte beider Übermittlungsrichtungen kennzeichnen, und zwar auch dann, wenn die beiden Übermittlungen in der Ebene RCL auf unterschiedlichen Wegen erfolgen, denn in einem Endpunkt werden diese beiden Übermittlungen wieder zusammengefasst, so dass für beide Übermittlungsrichtungen die QoS kennzeichnenden Daten QSD erfasst werden können. Eine nachträgliche Zusammenführung getrennt erfasster Daten QSD ist nicht erforderlich.

Die Daten QSD werden in den Endgeräte A, B zwischengespeichert oder im wesentlichen unmittelbar an die separate Instanz SP übermittelt. Beispielsweise erfolgt letzteres in regelmäßigem Abstand von einigen wenigen Sekunden. Besonders schöne Vorteile ergeben sich hierbei, wenn zur Übermittlung der Daten QSD bestehende Nachrichten genutzt werden. Beispielsweise können während eines Gesprächs CALL der Endpunkt A und der Gatekeeper CC_{GK} über regelmäßig ausgetauschte Keep Alive Nachrichten in ständiger Verbindung stehen (siehe hierzu H.225.0 (02/98), Kap. 7.9.1 und 7.9.2, Parameter **timeToLive** in Nachricht Registration Confirm RCF zum Setzen der Lebensdauer der Registrierung und Parameter **keepAlive** in Nachricht Registration Request RRQ zum Auffrischen, d.h. Verlängern der Lebensdauer einer bestehenden Registrierung). Üblicherweise ist die Periode dieser Keep Alive Nachrichten regelmäßig und liegt im Sekundenbereich. In diesen Nachrichten können die Daten QSD mitgegeben werden.

Der Abschluss des Gesprächs CALL wird durch Endgerät A oder B angezeigt. Als Folge beendet der Gatekeeper CC_{GK} die optional gestartete Vergebührung des Gesprächs CALL. Die Reservierung des Gesprächs CALL verfällt im Kommunikationsnetz nach kurzer Zeit. Der Resource Controller RC kann die freigegebenen Ressourcen wieder vergeben. Durch Signalisierung wird der Abschluss des Gesprächs CALL auch dem Call Controller CC_{SIP} der Gegenseite mitgeteilt.

Bei Zwischenspeicherung der Daten QSD werden diese gemäß einer Ausführung der Erfindung nach der Informationsübermittlung CALL an die Instanz SP übermittelt. Besonders schöne Vorteile ergeben sich, wenn diese erfindungsgemäße Übermittlung mit Hilfe von bereits bestehenden, in diesem Ausführungsbeispiel entsprechend der H.323 Standard Familie bzw. dem SIP Protokoll ausgebildeten Nachrichten N_{H.225.0}, N_{SIP} erfolgt, indem die Daten QSD z.B. als projektspezifische Elemente in bereits vorhandene, ggf. spezielle Nachrichtenfelder eingefügt werden, die in den einschlägigen Standards z.B. als freie Felder ohne Funktionsangabe (optionale Parameter) vorgesehen sind. Selbstverständlich sind auch separate Nachrichten N_{PROP} zur Übermittlung der erfindungsrelevanten Informationen möglich.

Von der Instanz SP werden die Daten QSD in der Datenbank DB gespeichert. Gemäß einer Ausführung der Erfindung werden die Daten QSD zusammen mit den optional gebildeten Daten BILL zur Vergebührung des Gesprächs CALL gespeichert. Auf diese Weise ist ein besonders effizienter Nachweis der Qualität eines vergebührten Gesprächs CALL möglich, da infolge der gemeinsamen Speicherung keine nachträgliche Zuordnung im Rahmen eines Postprocessings erforderlich ist.

Nach Abschluss des Gesprächs CALL sind die Endgeräte A, B bereit zum Aufbau weiterer Gespräche CALL. Vorzugsweise sind die Endgeräte A, B derart ausgebildet, dass die beschriebene erfindungsgemäße Erfassung und Speicherung der Daten QSD bei jedem Gespräch CALL durchgeführt wird.

Abschließend sei betont, dass die Beschreibung der für die Erfindung relevanten Komponenten des Kommunikationsnetzes grundsätzlich nicht einschränkend zu verstehen ist. Für einen einschlägigen Fachmann ist insbesondere offensichtlich, dass Begriffe wie 'Endpunkt', 'Instanz' 'Call Control Ebene' oder 'Resource Control Ebene' funktional und nicht physikalisch zu verstehen sind. Somit können beispielsweise die Endpunkte A, B oder die Instanz SP auch teilweise oder vollständig in Software und/oder über mehrere physikalische Einrichtungen verteilt realisiert werden.

## Patentansprüche

1. Verfahren zur Speicherung von Daten (QoS) zur Kennzeichnung der Dienstgüte einer Informationsübermittlung (CALL) in zumindest einem Kommunikationsnetz, mit zumindest einem Endpunkt (A) der Informationsübermittlung (CALL),
mit folgenden Schritten:
- von dem Endpunkt (A) werden die Daten (QoS) für die Informationsübermittlung (CALL) erfasst,
- die erfassten Daten (QoS) werden an eine separate Instanz (SP) zur Speicherung der Daten (QoS) übermittelt und von der Instanz (SP) gespeichert.

2. Verfahren nach Anspruch 1,
bei dem die Instanz (SP) bei einem eine Call Control Ebene (CCL) und eine Resource Control Ebene (RCL) umfassenden Kommunikationsnetz in der Call Control Ebene (CCL) angeordnet ist.

3. Verfahren nach Anspruch 2,
bei dem die Instanz (SP) einem in der Call Control Ebene (CCL) vorgesehenen Call Controller (CC) zugeordnet ist.

4. Verfahren nach einem der Ansprüche 1 bis 3,
bei dem die Daten (QoS) zusammen mit weiteren Daten (BILL) zur Vergebührung der Informationsübermittlung (CALL) gespeichert werden.

5. Verfahren nach einem der vorstehenden Ansprüche,
bei dem die Daten (QoS) bei einer bidirektionalen Informationsübermittlung die Dienstgüte beider Übermittlungsrichtungen kennzeichnen.

6. Verfahren nach einem der vorstehenden Ansprüche,
bei dem die Daten (QoS) nach der Informationsübermittlung (CALL) an die Instanz (SP) übermittelt werden.

7. Verfahren nach einem der vorstehenden Ansprüche,
bei dem die Daten (QoS) von dem Endpunkt (A) an die Instanz (SP) in vorhandenen, standardisierten Signalisierungsnachrichten (N_{H.225.0}, N_{SIP}), insbesondere Nachrichten zur Anzeige des Abschlusses der Informationsübermittlung (CALL), übermittelt werden.

8. Verfahren nach Anspruch 7,
bei dem die Daten (QoS) als projektspezifische Elemente in die vorhandenen, standardisierten Signalisierungsnachrichten (N_{H.225.0}, N_{SIP}) eingefügt werden.

9. Verfahren nach einem der Ansprüche 1 bis 6,
bei dem die Daten (QoS) von dem Endpunkt (A) an die Instanz (SP) in zumindest einer zusätzlichen, separaten Nachricht (N_{PROP}) übermittelt werden.

10. Computerprogrammprodukt (P) umfassend Softwarecodeabschnitte, mit denen ein Verfahren nach einem der vorstehenden Verfahrens-Ansprüche durch einen Prozessor ausgeführt wird.

11. Separate Instanz (SP) zur Durchführung eines Verfahrens nach einem der vorstehenden Verfahrens-Ansprüche.

12. Endpunkt (A), umfassend Mittel zur Durchführung eines Verfahrens nach einem der vorstehenden Verfahrens-Ansprüche.

13. Endpunkt (A) nach Anspruch 12,
bei dem die Mittel derart ausgebildet sind, dass das Verfahren bei jeder Informationsübermittlung (CALL) durchgeführt wird.

14. Endpunkt (A) nach Anspruch 13,
bei dem die Mittel derart ausgebildet sind, dass die Daten (QoS) bei jeder Informationsübermittlung (CALL) kontinuierlich erfasst werden.
